# FASCICULE DE BREVET EUROPEEN

(11) **EP 1 392 531 B1**
(45) Date de publication et mention de la délivrance du brevet: **23.04.2008**
(21) Numéro de dépôt: 02745295.2
(22) Date de dépôt: 15.05.2002
(51) Int. Cl.: B60C 25/14, B60C 25/00

(54) **MACHINE DE PRESENTATION A AXE HORIZONTAL DE PNEUMATIQUE**
HORIZONTALACHSIGE MASCHINE ZUM PRÄSENTIEREN VON REIFEN
HORIZONTAL AXIS MACHINE FOR PRESENTING TYRES

(30) Priorité: 17.05.2001 FR 0106626
(43) Date de publication de la demande: 03.03.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: BAUMGARTNER, Gérard, CH-1684 Mézières (CH); BIDON, Denis, F-63830 Durtol (FR); REPPEL, Emil, Willi, S-31142 Falkenberg (DE)
(74) Mandataire: Bauvir, Jacques
(86) Numéro de dépôt international: PCT/EP2002/005334
(87) Numéro de publication internationale: WO 2002/092365

(56) Documents cités:
- US-A- 4 160 537
- US-A- 5 460 036

## Description

L'invention concerne une machine de présentation de pneumatiques, notamment destinée à la vérification de l'état intérieur et extérieur d'un pneumatique usagé. De telles machines mentionées par example dans les documents US-A5460036 ou US-A4160537 constituent généralement le premier poste d'un atelier de rechapage afin de déterminer l'état intérieur et extérieur de pneumatiques mais peuvent être, bien entendu, également utilisées dans la fabrication de pneumatiques neufs par exemple pour le contrôle qualité de ces pneumatiques.

Dans ce qui suit, on entendra par «intérieur» d'un pneumatique la surface intérieure du tore constituant le pneumatique et par « extérieur » du pneumatique la surface extérieure de la bande de roulement, des flancs et des bourrelets du pneumatique.

On sait que la plupart des pneumatiques peuvent être rechapés, c'est-à-dire qu'il est possible, après l'usure normale de la bande de roulement, de remplacer cette bande, et même certaines nappes de renfort de la ceinture du pneumatique. Ces opérations sont très courantes pour les pneumatiques de véhicules de transport tels que les poids lourds et peuvent s'effectuer dans de véritables usines ou dans des ateliers de taille plus ou moins importante où les problèmes d'encombrement deviennent capitaux.

Aujourd'hui on cherche de plus en plus à avoir des machines de présentation " flexibles " susceptibles d'accepter des pneumatiques de dimensions s'étalant dans une large plage, voire même de réaliser plusieurs opérations telles que, par exemple, le contrôle intérieur et extérieur du pneumatique, la réparation ou lé brossage du pneumatique en vue de le rechaper.

Un type courant de machines de présentation ou de vérification existantes possèdent un bâti porteur d'un flasque destiné à recevoir l'un des côtés du pneumatique à vérifier, ce dernier étant disposé avec son axe de rotation horizontal, et porteur d'un support coopérant avec le flasque, disposé sous ledit pneumatique, pour maintenir ce pneumatique en position. Un bras porteur de doigts d'écartement des bourrelets du pneumatique est généralement disposé sur le côté accessible du pneumatique, c'est-à-dire celui opposé au flasque.

Il est clair que de telles machines sont à la fois encombrantes et limitées dans la plage des dimensions de pneumatiques acceptés.
Par ailleurs, apparaissent également d'autres difficultés de fonctionnement de ce type de machines de présentation. En effet, il est nécessaire, pour opérer la vérification complète de l'intérieur d'un pneumatique, étant donné l'accessibilité limitée à un côté de ce dernier, de vérifier chaque côté séparément en retirant le pneumatique après vérification du premier côté et en le réinstallant sur la machine après rotation de 180° par rapport à son plan équatorial. Il est clair que, d'une part, cette double opération augmente considérablement la durée de la vérification et, d'autre part, qu'elle nécessite une manutention supplémentaire pour le retournement du pneumatique, qui n'est pas négligeable dans la mesure où les pneumatiques concernés sont généralement de très grandes dimensions.

D'autres types de solutions proposent des machines de présentation de pneumatiques à axe horizontal dans lesquelles le pneumatique est amené à l'aide d'une rampe jusqu'à ce qu'il repose sur un support horizontal porteur dé deux rouleaux dont au moins un motorisé pour permettre la rotation dudit pneumatique sur le support. Un tel support porte également deux bras dotés de doigts d'écartement des bourrelets du pneumatique, respectivement positionnés de chaque côté dudit pneumatique. Un dispositif permet dans certains cas de surélever le niveau de ce support après mise en place du pneumatique, néanmoins cette élévation reste limitée. En effet, les dispositifs connus consistent soit en des parallélogrammes dont l'élévation est limitée par l'encombrement qu'ils supposent et les problèmes de rigidité, soit des systèmes où la montée est limitée par le positionnement vertical fixe des extrémités des bras.

De telles machines permettent de réaliser la vérification d'un pneumatique plus efficacement que les machines de présentation vues précédemment, le pneumatique étant ici généralement accessible simultanément par ses deux côtés. Cependant l'ensemble du support et des bras empiète sur l'emplacement préférentiel pour un opérateur pour observer l'intérieur du pneumatique. L'opérateur est donc-contraint d'adopter des positions peu confortables où il est notamment en permanence penché vers l'avant. Ce type de machines se révèle donc être très peu ergonomique.

L'invention vise à pallier l'ensemble de ces inconvénients.

Selon l'invention, la machine de présentation à axe horizontal de pneumatique autorisant un accès à l'intérieur dudit pneumatique, comporte un bâti porteur d'un montant vertical sur lequel est monté à translation verticale un support du pneumatique, ledit support assurant seul le maintien et la rotation du pneumatique autour de son axe en étant en contact avec ce dernier uniquement par un tronçon torique dudit pneumatique, ce tronçon étant disposé sensiblement verticalement lorsque le pneumatique est installé sur la machine.

De façon surprenante et a contrario des connaissances et expériences de l'homme de l'art en matière de machines de présentation ou de vérification de pneumatiques, cette machine réalise le maintien en hauteur d'un pneumatique à axe horizontal par une prise uniquement latérale sur sa circonférence tout en autorisant sans risque l'accès de l'opérateur à l'intérieur du pneumatique et en permettant également sa rotation. En effet, pour des questions de poids, puisqu'il s'agit comme on l'a déjà dit généralement de pneumatiques de grandes dimensions, de stabilité et de garantie de tenue par rapport à l'opérateur, les machines maintiennent généralement un pneumatique par un premier ancrage soutenant le pneumatique, disposé sous ce dernier et par des deuxièmes ancrages latéraux constitués par les bras.

Selon une caractéristique de l'invention, le support du pneumatique comporte des premiers moyens d'appui du pneumatique, des deuxièmes moyens de maintien et d'écartement des bourrelets dudit pneumatique et des troisièmes moyens d'appui et de rotation de ce dernier autour de son axe, ces trois moyens formant un système de triangulation garantissant la préhension du pneumatique et son maintien stable en position de travail de la machine.

Ce système de triangulation suffit, en effet, contrairement aux a priori de l'homme du métier, à réaliser la préhension d'un pneumatique en garantissant son bon maintien et sa stabilité

D'autres caractéristiques et avantages de l'invention apparaîtront à la lecture d'un exemple de réalisation d'une machine conforme à l'invention en référence au dessin dans lequel :
- la figure 1 est une coupe verticale partielle d'une machine conforme à l'invention dans laquelle sont représentés en position de repos deux pneumatiques de dimensions différentes,
- la figure 2 est une coupe verticale partielle de la machine conforme à l'invention dans une position de travail pour l'un des pneumatiques représentés sur la figure 1,

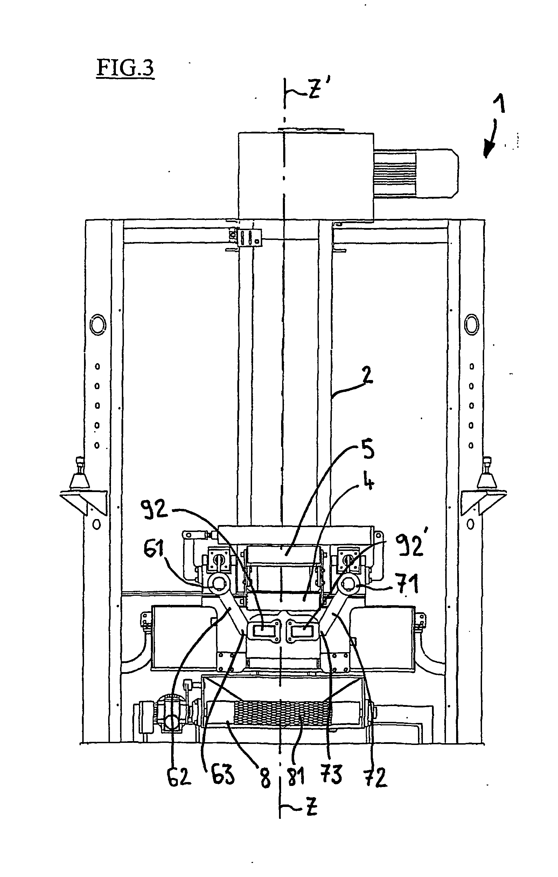

- la figure 3 est une représentation en vue de face de la machine de présentation conforme à l'invention,
- la figure 4 est une coupe schématique partielle verticale de certains éléments de la machine représentée sur la figure 1,
- les figures 5A à 5C sont des représentations partielles en vue de dessus illustrant le fonctionnement de la machine,
- la figure 6 est une coupe verticale partielle de la machine conforme à l'invention pour l'un des pneumatiques représentés à la figure 1 dans deux positions de fonctionnement de ladite machine.

Dans ce qui suit, on désignera par les axes X'X, Y'Y et Z'Z représentés sur les figures respectivement les directions dites latérale, verticale et transversale.

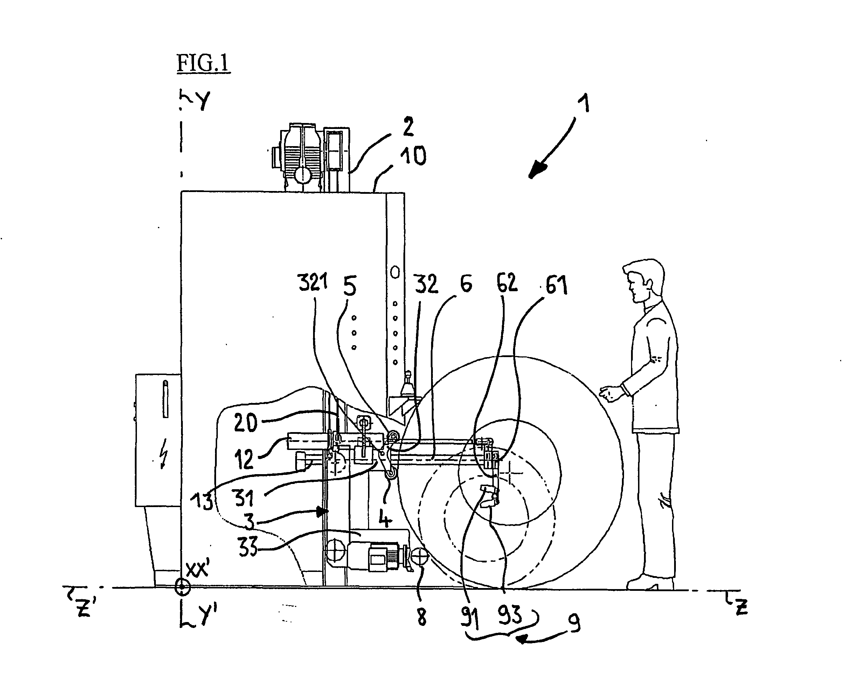

Selon la figure 1, la machine 1 comporte un bâti 10 qui comprend un montant vertical 2 directement fixé sur le sol de l'usine ou de l'atelier. Sur ce montant 2 est monté à translation verticale un support 3 d'accueil d'un pneumatique « à axe horizontal », c'est-à-dire que l'axe de rotation du pneumatique disposé sur le support appartient à un plan horizontal. Ce support est entraîné grâce à un câble 20 et un dispositif de commande, tel qu'un bouton poussoir non représenté, qui permet à l'opérateur d'arrêter la course du support à la hauteur de son choix et donc de choisir en fonction de sa propre stature et de la dimension du pneumatique la hauteur à laquelle sera présenté le pneumatique.

Le support 3 porte des premiers moyens d'appui 4, 5 de la surface extérieure du pneumatique, des deuxièmes moyens 6, 7 de maintien du pneumatique sur la machine et d'écartement des bourrelets dudit pneumatique, et des troisièmes moyens d'appui et de rotation 8 dudit pneumatique autour de son axe.

Les premiers moyens d'appui sont constitués par deux rouleaux 4 et 5 montés libres en rotation autour d'axes parallèles entre eux et orientés selon la direction latérale, sur une extrémité 31 du support 3 par l'intermédiaire d'un levier 32 monté sur ladite extrémité, l'axe de rotation du pneumatique à présenter étant lui-même parallèles à ces axes.

Avantageusement le levier 32 est monté libre en rotation autour de l'axe 321, ce qui permet notamment à la machine d'accepter des pneumatiques dans une plage dimensionnelles plus importante.

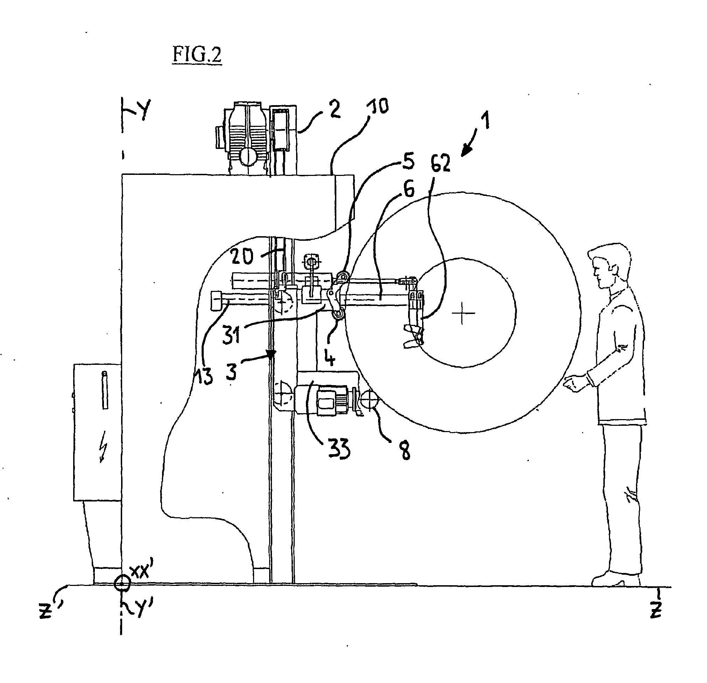

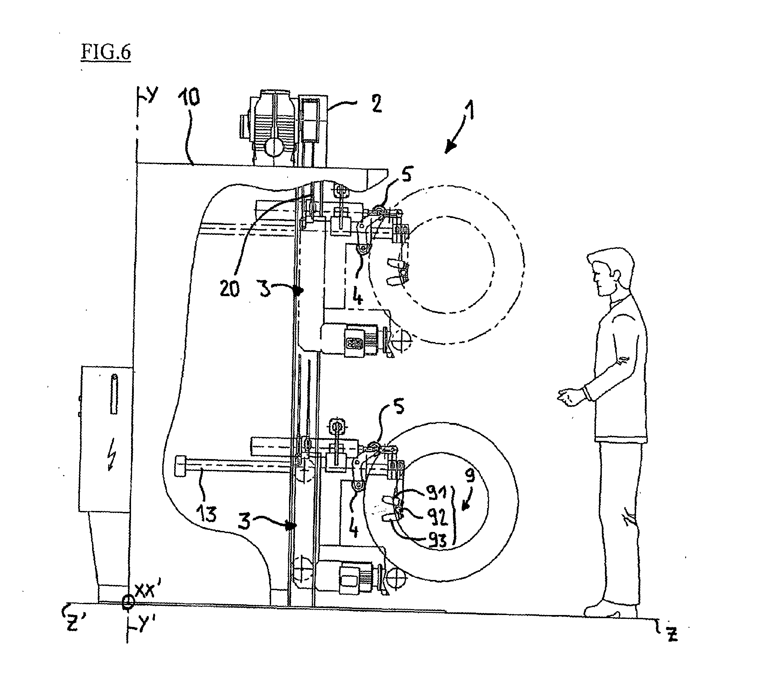

On peut également envisager que les premiers moyens d'appui soient constitués par un seul rouleau, cependant la présence de deux rouleaux stabilise la position du pneumatique qui vient simultanément au contact des deux rouleaux, comme le montrent clairement les figures 2 et 6, et permet, comme on l'a dit précédemment d'élargir la plage dimensionnelle de pneumatiques acceptés par la machine.

Les troisièmes moyens d'appui et de rotation comprennent un rouleau motorisé 8 d'axe parallèle à la direction latérale, dont la surface extérieure est recouverte par un manchon 81 portant des stries afin d'entraîner le pneumatique à son contact en rotation. D'autres systèmes facilitant l'entraînement en rotation par le rouleau 8. peuvent être envisagés tels qu'un grillage par exemple.

Le rouleau motorisé 8 est monté sur une des extrémités 33 du support 3. Les extrémités 31 et 33 du support 3 sont représentées sur la figure 1, l'extrémité 31 étant disposée verticalement au-dessus de l'extrémité 33, donc les rouleaux 4 et 5 étant disposés au-dessus du rouleau 8, cependant on peut également envisager d'inverser ces deux positions.

Les deuxièmes moyens de maintien du pneumatique sont constitués par deux bras 6, 7 parallèles qui s'étendent dans la direction transversale et dont les extrémités forment un coude 61, 71 et portent des avant-bras 62 et 72. Les avant-bras 62 et 72 s'étendent dans un plan vertical, leurs extrémités libres 63 et 73 portent respectivement un système de doigts 9, 9' d'écartement des bourrelets du pneumatique à présenter.

Les bras 6 et 7 sont montés translatables dans la direction latérale par rapport au support 3 de sorte à se rapprocher ou inversement à s'éloigner l'un de l'autre. Ce rapprochement permet la mise en place du pneumatique puis le maintien en position du pneumatique, maintien qui, comme on le verra dans la suite, permet néanmoins au pneumatique de tourner selon son axe de rotation. On peut prévoir avantageusement un dispositif non représenté sous forme de crémaillère et pignon par exemple, pour assurer le synchronisme et la symétrie des mouvements de translation des deux bras 6 et 7.

Les extrémités des bras 6 et 7 sont également translatables selon la direction transversale. A cette fin, le mouvement dans la direction transversal est assuré par un vérin 12 monté sur chacun des bras 6, 7 et dont la pression est réglable par l'opérateur. Ce réglage permet, comme on le verra dans la description du fonctionnement de la machine, une adaptation de la machine à la dimension du pneumatique. Afin de s'assurer du synchronisme des bras dans leur déplacement transversal, une barre de liaison 13 relie entre eux les deux bras 6 et 7, comme le montre la figure 6.

Chaque avant-bras 62, 72 porte, comme on l'a dit, à son extrémité libre 63, 73 qui est la plus éloignée du support 3, un système de doigts 9, 9' de préhension du pneumatique et d'écartement des bourrelets dudit pneumatique.

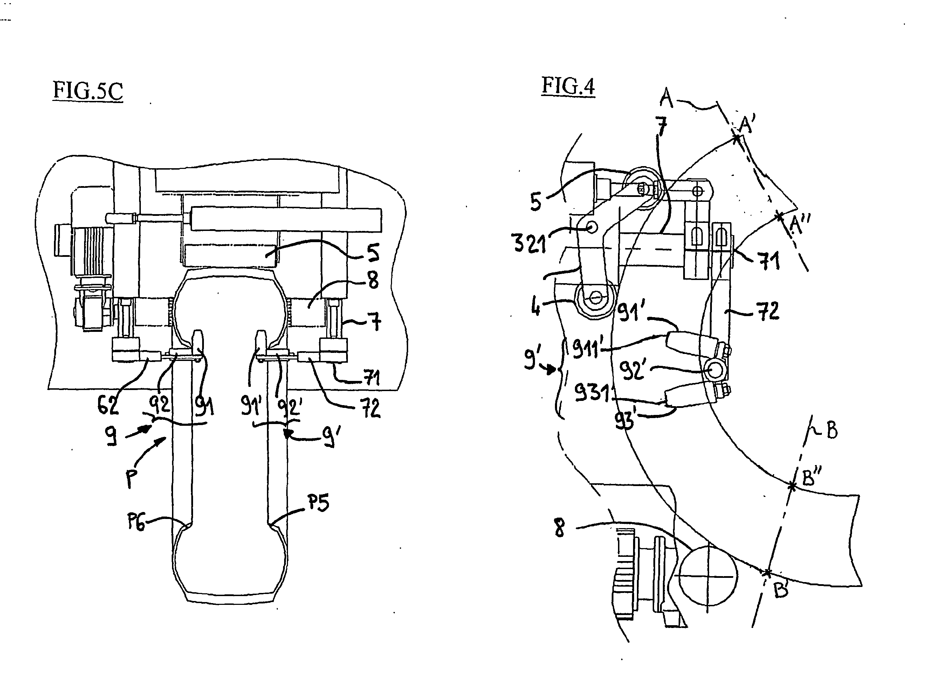

Les systèmes de doigts 9, 9' portés par chaque avant-bras 62, 72 étant identiques et symétriques par rapport à un plan vertical parallèle aux axes des bras 6 et 7 passant par le centre du support, on ne décrira ici que l'un de ces systèmes, en référence à la figure 4.

Le système 9' porté par le bras 7 est formé de trois doigts 91', 92' et 93' montés libre en rotation sur leur axe, dont deux doigts 91' et 93' sont fixés respectivement par l'une de leurs extrémités sur l'extrémité libre 73 de l'avant-bras 72 et orientés dans une direction sensiblement transversale, alors que le troisième doigt 92' disposé verticalement entre les deux autres est orienté dans la direction latérale et fixé par l'intermédiaire des extrémités de son axe à ladite extrémité 73.

Les extrémités libres 911', 931' respectivement des doigts 91' et 93' sont orientées vers l'intérieur de la machine de présentation 1, formant par rapport au bras 7 une sorte de retour pour assurer le maintien et l'écartement des bourrelets du pneumatique

De plus, les doigts 91' et 93' sont orientés symétriquement par rapport à un plan horizontal comprenant l'axe du troisième doigt 92', et leurs extrémités 911' et 931' sont légèrement écartées l'une de l'autre par rapport à ce plan afin d'assurer la bonne rotation des doigts, la direction de leur axe de rotation respectif étant alors plus proche de la direction radiale de la zone des bourrelets du pneumatique avec laquelle ils se trouvent au contact.

Le troisième doigt 92' assure le bon positionnement du pneumatique lors du chargement de ce dernier, par son contact avec le bourrelet et avec l'aide des deux autres doigts 91', 93' le maintien du pneumatique en position.

Notons que l'opérateur peut agir sur la pression des vérins afin d'ajuster en fonction de la dimension du pneumatique la pression et donc l'effort du doigt 92' sur le bourrelet du pneumatique, un système de validation maintenant en parallèle une pression minimale des vérins pour empêcher un recul des bras.

Pour permettre le maintien d'un pneumatique à l'aide des trois moyens précités, on réalise une triangulation entre lesdits trois moyens qui consiste à positionner les deux bras 6 et 7 verticalement entre les deux rouleaux 4 et 5 et le rouleau motorisé 8, les deux rouleaux n'étant pas par ailleurs dans le même plan vertical que le rouleau motorisé 8 et les systèmes de doigts 9 étant également dans un plan vertical différent des rouleaux 4, 5 de sorte que l'extrémité des bras 62, 72, le rouleau motorisé 8 et les deux rouleaux 4, 5 pris ensemble en projection dans un plan vertical parallèle aux bras forment un triangle.

Ainsi un pneumatique est maintenu de façon stable par l'ensemble des trois moyens par la prise d'un seul de tronçon AB de pneumatique est disposé sensiblement verticalement. Ce tronçon AB de pneumatique représenté sur la figure 4 et délimité par les plans de coupe radiaux A et B est, en effet, tel que les segments A'B' et respectivement A"B" sont sensiblement verticaux.

On constate donc de manière surprenante, étant donné le poids des pneumatiques considérés, que ce système de triangulation « à prise latérale » suffit à réaliser une préhension et un maintien du pneumatique en toute sécurité y compris pendant l'écartement de ses bourrelets et sa rotation autour de son axe.

Les caractéristiques précités d'une machine conforme à l'invention permettent d'avoir une très grande souplesse d'acceptation des pneumatiques. En effet, une telle machine sera susceptible d'accueillir des pneumatiques indépendamment de la forme de leurs bourrelets, qu'ils soient de petites (tourisme, par exemple) ou de grandes dimensions (poids-lourds, génie civil, etc...) et pour des largeurs de bande de roulement pouvant s'étendre de 100 à 500 mm.

Dans ce qui suit, on décrira succinctement en référence aux figures 2, 4 et 5A à 5C, le fonctionnement d'une machine de présentation conforme à l'invention. On notera 9 le système de doigt porté par le bras 6 et 9' par le bras 7.

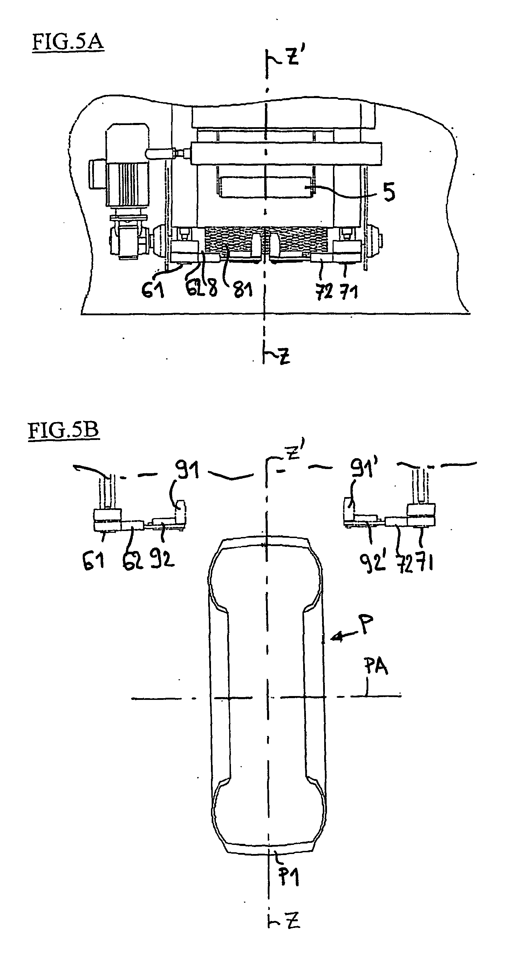

Selon la figure 5A, la machine de présentation 1 est au repos : le support 3 est dans sa position la plus proche du sol tel qu'on le voit sur la figure 1, les bras 6 et 7 sont rentrés dans la direction transversale Z'Z, c'est-à-dire qu'ils sont dans leur position la plus proche du support 3, les systèmes 9 et 9' de doigts étant dans leur position la plus proche l'un de l'autre dans la direction latérale X'X.

Comme le montre la figure 5B pour accueillir un pneumatique P, on écarte latéralement les bras 6 et 7 l'un de l'autre, leur mouvement étant synchronisé par le dispositif à crémaillère et on sort les bras transversalement par rapport au support 3 en actionnant le vérin.

Le pneumatique P est alors présenté avec son axe de rotation PA dans un plan horizontal et plus précisément ici parallèlement à la direction latérale X'X.

Le pneumatique est avancé selon la direction transversale jusqu'au contact de sa bande de roulement P1 avec le rouleau motorisé 8 comme on le voit sur la figure 1. On ajuste alors transversalement l'avancée des systèmes de doigts 9 et 9' de sorte qu'ils soient disposés latéralement en face de l'espace cylindrique délimité par la base des bourrelets du pneumatique P. Par ailleurs, l'assurance du bon positionnement vertical des systèmes 9 et 9' par rapport à cet espace cylindrique est liée lors de la fabrication de la machine à la plage de dimension des pneumatiques acceptés comme cela a été souligné précédemment.

Les bras 6 et 7 sont d'abord rapprochés latéralement jusqu'à ce que les doigts respectivement 91, 93 et 91', 93' pénètrent à l'intérieur du pneumatique P puis rentrés transversalement jusqu'au contact des bourrelets P5 et P6 du pneumatique avec les doigts 92 et 92'.

Ceci est réalisé grâce à une pression minimale pour qu'il y ait le contact du pneumatique avec les rouleaux libres en rotation 4 et 5 supérieurs, cette pression peut néanmoins être ajustée par l'opérateur en fonction des dimensions des pneumatiques. Cette disposition permet à la fois d'assurer le maintien du pneumatique sans empêcher par la suite sa rotation.

On procède alors à un ajustement de l'écartement latéral des bras 6 et 7 l'un vis-à-vis de l'autre afin de s'assurer du contact entre les bourrelets P5 et P6 et l'intérieur des doigts 91, 93 et 91', 93'; position représentée sur la figure 5C.

On peut alors procéder à l'élévation du support 3 qui porte le pneumatique P jusqu'à une hauteur déterminée par l'opérateur en fonction de sa propre stature (figure 2).

Selon le type d'opération à réaliser, on peut alors procéder à l'écartement des bourrelets du pneumatiques P5 et P6 en écartant à nouveau les bras 6 et 7 l'un de l'autre dans la direction latérale jusqu'à ce que les doigts 91 et 93 (91', 93') exercent sur les bords du pneumatique une légère traction permettant de réaliser l'écartement des bourrelets souhaité. Cette opération peut être également réalisée pendant la rotation du pneumatique par l'entraînement du rouleau motorisé 8.

La rotation du pneumatique peut être faite dans un sens ou dans l'autre, ce qui permet une inspection aisée totale du pneumatique simultanément des deux côtés et sur toute sa circonférence et offre la possibilité de revenir en arrière par rapport au sens de l'inspection si on souhaite revoir quelque chose.

Il apparaît clairement que cette machine de présentation peut aussi bien être utilisée pour réaliser sur l'intérieur ou l'extérieur du pneumatique des opérations de vérification, de brossage, de réparation, de pose de produits semi-finis ou de revêtement, etc....

## Revendications

1. Machine de présentation à axe horizontal de pneumatique autorisant un accès à l'intérieur dudit pneumatique, qui comporte un bâti (10) porteur d'un montant vertical (2) sur lequel est monté à translation verticale un support (3) du pneumatique, ledit support assurant seul le maintien et la rotation du pneumatique autour de son axe en étant en contact avec ce dernier uniquement par un tronçon torique (AB) dudit pneumatique, ce tronçon (AB) étant disposé sensiblement verticalement lorsque le pneumatique est installé sur la machine.

2. Machine de présentation selon la revendication 1, dans laquelle le support (3) du pneumatique comporte des premiers moyens (4, 5) d'appui du pneumatique, des deuxièmes moyens (6, 7) de maintien et d'écartement des bourrelets dudit pneumatique et des troisièmes moyens (8) d'appui et de rotation de ce dernier autour de son axe, ces trois moyens formant un système de triangulation garantissant la préhension du pneumatique et son maintien stable en position de travail de la machine.

3. Machine selon la revendication 2, dans laquelle les premiers moyens d'appui du pneumatique comprennent au moins un rouleau libre en rotation (4, 5), les troisièmes moyens d'appui comprennent un rouleau motorisé (8), les axes de ces rouleaux (4, 5, 8) étant parallèles entre eux et situés dans des plans horizontaux et les deuxièmes moyens comprennent des bras (6, 7) d'axe perpendiculaire à ceux des rouleaux (4, 5, 8), la projection dans un plan vertical perpendiculaire à l'axe des rouleaux (4, 5, 8) des extrémités libres (62, 72) des bras (6, 7), du centre du rouleau motorisé (8) et du centre du rouleau libre (4,5) formant un triangle.

4. Machine selon l'une quelconque des revendications 2 ou 3, dans laquelle les deuxièmes moyens comprennent des bras (6, 7) d'axes perpendiculaires au montant vertical (2) du bâti (10), translatables latéralement et dont chaque extrémité libre (62, 72) est déplaçable transversalement par rapport audit bâti.

5. Machine selon la revendication 4, dans laquelle les deux bras (6, 7) sont synchronisés dans leur déplacement latéral de sorte à se rapprocher ou s'éloigner simultanément et symétriquement l'un de l'autre, ainsi que dans leur mouvement transversal.

6. Machine selon l'une quelconque des revendications 3 à 5, dans laquelle les bras (6, 7) possèdent respectivement une extrémité libre (62, 72) porteuse d'un système (9) à trois doigts (91, 92, 93) de prise et d'écartement des bourrelets du pneumatique à présenter.

7. Machine selon la revendication 6, dans laquelle chaque système (9) de doigts se compose de deux doigts (91, 93) d'écartement des bourrelets de pneumatique, s'étendant sensiblement dans la direction transversale et d'un troisième doigt (92) de positionnement du système de doigts (9) par rapport au pneumatique, disposé verticalement entre les deux autres et s'étendant dans la direction latérale.

8. Machine selon l'une quelconque des revendications 2 à 7, les premiers moyens d'appui (4, 5) sont disposés verticalement au-dessus des troisièmes moyens d'appui et de rotation (8) et transversalement plus près du montant vertical (2) que lesdits troisièmes moyens, des extrémités libres (62, 72) des deuxièmes moyens de maintien du pneumatique étant verticalement disposées entre les premiers (4, 5) et troisièmes moyens (8).

9. Machine selon l'une quelconque des revendications 2 à 7, les troisièmes moyens d'appui et de rotation (8) sont disposés verticalement au-dessus des premiers moyens de d'appui (4, 5) et transversalement plus près du montant vertical que lesdits premiers moyens, des extrémités libres (62, 72) des deuxièmes moyens de maintien (6, 7) du pneumatique étant verticalement disposées entre les premiers (4, 5) et troisièmes moyens (8).

10. Machine selon l'une quelconque des revendications 3 à 9, dans laquelle les premiers moyens d'appui comprennent deux rouleaux libres en rotation (4, 5), montés respectivement sur une des extrémités d'un levier (32) lui-même monté libre en rotation sur le support (3), les axes de rotation respectifs des rouleaux (4, 5) et du levier (32) étant parallèles entre eux.

11. Utilisation de la machine selon l'une quelconque des revendications 1 à 10, pour la vérification de l'état de l'intérieur et/ou de l'extérieur d'un pneumatique.

12. Utilisation de la machine selon l'une quelconque des revendications 1 à 10, pour réaliser un brossage de l'intérieur et/ou de l'extérieur d'un pneumatique.

13. Utilisation de la machine selon l'une quelconque des revendications 1 à 10, pour la réparation de l'intérieur et/ou de l'extérieur d'un pneumatique.

14. Utilisation de la machine selon l'une quelconque des revendications 1 à 10, pour la pose de produits semi-finis ou revêtements à l'intérieur et/ou à l'extérieur d'un pneumatique.

## Claims

1. Machine for presenting a tyre with the axis horizontal, allowing access to the inside of the said tyre, which has a frame (10) bearing an upright (2) on which a support (3) for the tyre is mounted for vertical translation, the said support ensuring on its own the holding and rotation of the tyre about its axis by being in contact with the latter solely via a toric section (AB) of the said tyre, this section (AB) being arranged substantially vertically when the tyre is installed on the machine.

2. Presentation machine according to Claim 1, in which the support (3) for the tyre has first means (4, 5) for supporting the tyre, second means (6, 7) for holding and spreading the beads of the said tyre and third means (8) for supporting and rotating the latter about its axis, these three means forming a triangulation system guaranteeing the grasping of the tyre and its stable holding in the working position of the machine.

3. Machine according to Claim 2, in which the first means for supporting the tyre comprise at least one freely rotating roller (4, 5), the third supporting means comprise a motorised roller (8), the axes of these rollers (4, 5, 8) being mutually parallel and situated in horizontal planes, and the second means comprise arms (6, 7) with axes perpendicular to those of the rollers (4, 5, 8), the projection of the free ends (62, 72) of the arms (6, 7), of the centre of the motorised roller (8) and of the centre of the free roller (4, 5) onto a vertical plane perpendicular to the axis of the rollers (4, 5, 8) forming a triangle.

4. Machine according to either one of Claims 2 and 3, in which the second means comprise arms (6, 7) with axes perpendicular to the upright (2) of the frame (10), which are laterally translatable and each free end (62, 72) of which is displaceable transversely relative to the said frame.

5. Machine according to Claim 4, in which the two arms (6, 7) are synchronised in their lateral displacement so as to come closer to or move away from each other simultaneously and symmetrically, as well as in their transverse movement.

6. Machine according to any one of Claims 3 to 5, in which the arms (6, 7) possess respectively a free end (62, 72) bearing a system (9) with three fingers (91, 92, 93) for gripping and spreading the beads of the tyre to be presented.

7. Machine according to Claim 6, in which each system (9) of fingers is composed of two fingers (91, 93) for spreading the tyre beads, extending substantially in the transverse direction, and of a third finger (92) for positioning the system of fingers (9) relative to the tyre, arranged vertically between the other two and extending in the lateral direction.

8. Machine according to any one of Claims 2 to 7, in which the first supporting means (4, 5) are arranged vertically above the third supporting and rotating means (8) and transversely nearer to the upright (2) than the said third means, free ends (62, 72) of the second means for holding the tyre being vertically arranged between the first means (4, 5) and third means (8).

9. Machine according to any one of Claims 2 to 7, in which the third supporting and rotating means (8) are arranged vertically above the first supporting means (4, 5) and transversely nearer to the upright than the said first means, free ends (62, 72) of the second means (6, 7) for holding the tyre being vertically arranged between the first means (4, 5) and third means (8).

10. Machine according to any one of Claims 3 to 9, in which the first supporting means comprise two freely rotating rollers (4, 5), mounted respectively on one of the ends of a lever (32) itself mounted so as to rotate freely on the support (3), the respective axes of rotation of the rollers (4, 5) and of the lever (32) being mutually parallel.

11. Use of the machine according to any one of Claims 1 to 10, for inspecting the state of the inside and/or the outside of a tyre.

12. Use of the machine according to any one of Claims 1 to 10, for buffing the inside and/or the outside of a tyre.

13. Use of the machine according to any one of Claims 1 to 10, for repairing the inside and/or the outside of a tyre.

14. Use of the machine according to any one of Claims 1 to 10, for applying semifinished products or coverings to the inside and/or the outside of a tyre.

## Patentansprüche

1. Horizontalachsige Präsentationsmaschine für Luftreifen, die einen Zugang zum Inneren des Luftreifens erlaubt, die ein Gestell (10) aufweist, das einen vertikalen Ständer (2) trägt, auf den in vertikaler Verschiebung ein Träger (3) des Luftreifens installiert ist, wobei der Träger allein das Halten und das Drehen des Luftreifens um seine Achse bei gleichzeitiger Berührung mit diesem Letzteren nur über einen torischen Abschnitt (AB) des Luftreifens sicherstellt, wobei dieser Abschnitt (AB) im Wesentlichen vertikal angeordnet ist, wenn der Luftreifen auf der Maschine installiert ist.

2. Präsentationsmaschine nach Anspruch 1, bei der der Träger (3) des Luftreifens erste Mittel (4, 5) zum Aufliegen des Luftreifens aufweist, zweite Halte-und Spreizmittel (6, 7) der Wülste des Luftreifens und dritte Auflage- und Drehmittel (8) dieses Letzteren um seine Achse, wobei die drei Mittel ein Triangulationssystem bilden, das das Ergreifen des Luftreifens und sein stabiles Halten in Arbeitsposition der Maschine garantiert.

3. Maschine nach Anspruch 2, bei der die ersten Auflagemittel des Luftreifens mindestens eine frei drehende Walze (4, 5) aufweisen, die dritten Auflagemittel eine angetriebene Walze (8) aufweisen, wobei die Achsen dieser Walzen (4, 5, 8) zueinander parallel sind und in horizontalen Ebenen liegen, und die zweiten Mittel Arme (6, 7) mit Achse im rechten Winkel zu der der Walzen (4, 5, 8) aufweisen, wobei die Projektion in einer vertikalen Ebene im rechten Winkel zu der Achse der Walzen (4, 5, 8) der freien Enden (62, 72) der Arme (6, 7), der Mitte der angetriebenen Walze (8) und der Mitte der freien Walze (4, 5) ein Dreieck bilden.

4. Maschine nach einem der Ansprüche 2 oder 3, bei der die zweiten Mittel Arme (6, 7) mit Achsen im rechten Winkel zu der vertikalen Achse (2) des Gestells (10) aufweisen, die seitlich verschiebbar sind und von welchen jedes freie Ende (62, 72) quer in Bezug auf das Gestell beweglich ist.

5. Maschine nach Anspruch 4, bei der die zwei Arme (6, 7) in ihrer seitlichen Bewegung derart synchronisiert sind, dass sie sich gleichzeitig und symmetrisch einander nähern oder voneinander entfernen sowie bei ihrer Querbewegung.

6. Maschine nach einem der Ansprüche 3 bis 5, bei der die Arme (6, 7) jeweils ein freies Ende (62, 72) besitzen, das ein System (9) mit drei Fingern (91, 92, 93) zum Ergreifen und Spreizen der Wülste des zu präsentierenden Luftreifens trägt.

7. Maschine nach Anspruch 6, bei der jedes Fingersystem (9) aus zwei Fingern (91, 93) zum Spreizen der Wülste des Luftreifens besteht, die sich im Wesentlichen in die Querrichtung erstrecken, und aus einem dritten Finger (92) zum Positionieren des Fingersystems (9) in Bezug auf den Luftreifen, der vertikal zwischen den zwei anderen angeordnet ist und sich in die Seitenrichtung erstreckt.

8. Maschine nach einem der Ansprüche 2 bis 7, wobei die ersten Auflagemittel (4, 5) vertikal über den dritten Auflage- und Drehmitteln (8) und quer näher an dem vertikalen Ständer (2) angeordnet sind als die dritten Mittel, wobei die freien Enden (62, 72) der zweiten Haltemittel des Luftreifens vertikal zwischen den ersten Mitteln (4, 5) und dritten Mitteln (8) angeordnet sind.

9. Maschine nach einem der Ansprüche 2 bis 7, wobei die dritten Auflage- und Drehmittel (8) vertikal über den ersten Auflagemitteln (4, 5) und quer näher an dem vertikalen Ständer angeordnet sind als die ersten Mittel, wobei die freien Enden (62, 72) der Haltemittel (6, 7) des Luftreifens vertikal zwischen den ersten (4, 5) und dritten Mitteln (8) angeordnet sind.

10. Maschine nach einem der Ansprüche 3 bis 9, bei der die ersten Auflagemittel zwei frei drehende Walzen (4, 5) aufweisen, die jeweils auf eines der Enden eines Hebels (32) montiert sind, der selbst frei drehend auf den Träger (3) montiert ist, wobei die jeweiligen Drehachsen der Walzen (4, 5) und des Hebels (32) untereinander parallel sind.

11. Gebrauch der Maschine nach einem der Ansprüche 1 bis 10, zum Prüfen des Zustands des Inneren und/oder des Äußeren eines Luftreifens.

12. Gebrauch der Maschine nach einem der Ansprüche 1 bis 10, zum Ausführen eines Ausbürstens des Inneren und/oder Äußeren eines Luftreifens.

13. Gebrauch der Maschine nach einem der Ansprüche 1 bis 10, zum Reparieren des Inneren und/oder des Äußeren eines Luftreifens.

14. Gebrauch der Maschine nach einem der Ansprüche 1 bis 10, zum Aufbringen von Halbfertigprodukten oder Beschichtungen im Inneren und/oder auf dem Äußeren eines Luftreifens.
